(19) Europäisches Patentamt
European Patent Office
Office européen des brevets

(11) EP 0 406 433 B2

(12) NEW EUROPEAN PATENT SPECIFICATION

(45) Date of publication and mention of the opposition decision:
**03.01.2007 Bulletin 2007/01**

(45) Mention of the grant of the patent:
**12.03.1997 Bulletin 1997/11**

(21) Application number: **89912503.3**

(22) Date of filing: **09.11.1989**

(51) Int Cl.:
***C09K 5/04*** *(2006.01)* ***C07C 43/02*** *(2006.01)*
*F25D 5/00* *(2006.01)*

(86) International application number:
**PCT/JP1989/001150**

(87) International publication number:
**WO 1990/005172 (17.05.1990 Gazette 1990/11)**

# (54) TETRAFLUOROETHANE COMPOSITION FOR A REGRIGERATOR

TETRAFLUORÄTHANGEMISCH FÜR EINEN KÜHLSCHRANK

COMPOSE A BASE DE TETRAFLUOROETHANE POUR REFRIGERATEURS

(84) Designated Contracting States:
**DE FR GB IT NL SE**

(30) Priority:
**11.11.1988 JP 28400888**
**11.11.1988 JP 28400988**
**11.11.1988 JP 28401088**
**11.11.1988 JP 28401188**
**06.01.1989 JP 26089**
**06.01.1989 JP 26189**
**06.01.1989 JP 26289**
**10.01.1989 JP 134489**
**10.01.1989 JP 134589**
**11.04.1989 JP 8982589**
**19.07.1989 JP 18452889**
**25.08.1989 JP 21755089**
**25.08.1989 JP 21755189**

(43) Date of publication of application:
**09.01.1991 Bulletin 1991/02**

(73) Proprietor: **ASAHI GLASS COMPANY LTD.**
**Chiyoda-ku**
**Tokyo 100 (JP)**

(72) Inventors:
- **OHTSUKA, Yoshihiro**
  **Yokohama-shi**
  **Kanagawa-ken 246 (JP)**
- **FUKUDA, Hiroki**
  **Kanagawa-ken 238 (JP)**
- **TANABE, Kiyoshi**
  **Yokohama-shi**
  **Kanagawa-ken 247 (JP)**
- **FUKUSHIMA, Masato**
  **Chiba-ken 290 (JP)**
- **WATANABE, Nahohiro**
  **Chiba-ken 260 (JP)**

(74) Representative: **Wächtershäuser, Günter**
**Wächtershäuser & Hartz**
**Weinstrasse 8**
**80333 München (DE)**

(56) References cited:
**EP-A- 0 336 171** **EP-A- 0 377 122**
**DE-A- 3 543 171** **DE-C- 3 003 471**
**DE-C- 3 524 737** **GB-A- 1 379 956**
**JP-A- 1 259 093** **JP-A- 1 259 095**
**JP-A- 61 281 199**

- **PATENT ABSTRACTS OF JAPAN vol. 7, no. 11 (C-145) 18 January 1983 & JP,A,57 168 979 (MATSUSHITA DENKI SANGYO KK) 18 October 1982**
- **PATENT ABSTRACTS OF JAPAN vol. 9, no. 166 (C-290) 11 July 1985 & JP,A,60 040 185 (YAZAKI SOUGIYOU KK) 02 March 1985**
- **PATENT ABSTRACTS OF JAPAN vol. 7, no. 147 (C-173) 28 June 1983 & JP,A,58 061 173 (MATSUSHITA DENKI SANGYO KK) 12 April 1983**
- **PATENT ABSTRACTS OF JAPAN vol. 8, no. 41 (C-211) 22 February 1984 & JP,A,58 201 878 (SANYO DENKI KK) 24 November 1983**
- **"Research Disclosure", October 1978, No.174, item 17463, Ed. Union Carbide Brochure "Ucon Fluids and Lubricants", edition 1981, pages 2,3,4,9,16,17,19,22**
- **Union Carbide Brochure "Chemicals and Plastics, Physical Properties", edition: 1970-80; title page, list of contents, page 22**

EP 0 406 433 B2

## Description

TECHNICAL FIELD

The present invention relates to a composition for a refrigerator comprising a tetrafluoroethane and a polyether which is compatible at any optional ratio with a tetrafluoroethane, preferably 1,1,1,2-tetrafluoroethane (R-134a), as a cooling medium at a temperature of from -20˚C or lower to +40˚C or higher and which has a low hygroscopic property.

R-12 (dichlorodifluoromethane) is used as an excellent cooling medium in a refrigerating cycle of e.g refrigerators or car air conditioners. However, R-12 is likely to destroy the ozone layer in the stratosphere and adversely affect the living bodies. Therefore, a study for a substitute material is being made. As a substitute for R-12, R-134a is considered to be most prospective. However, a naphthene mineral oil and a paraffin mineral oil which are refrigerator oils commonly used for R-12, are incompatible with R-134a. Therefore, such a naphthene mineral oil or paraffin mineral oil can not be used as a refrigerator oil for R-134a. Polyether oils having the structures as identified in Table 1, are known as substances relatively well compatible with R-134a.

The polyether oil (a) is disclosed, for example, in Dupont Research Disclosure (17483, Oct., 1978). The polyether oil (b) is disclosed, for example, in US Patent 4,755,316.

However, the polyether oils as identified in Table 1 had the following problems.

(1) Compatibility with R-134a is not adequate. In order to provide a lubricating property as the most important role of the freezer oil, it is essential that the oil is compatible with R-134a and capable of being circulated in the system together with R-134a. With respect to the freezer oils (a) and (b), the upper critical solution temperatures (see the footnote of Table 1) are as shown in Table 1 in the case where the kinematic viscosity at 40˚C is 100x10$^{-6}$ m$^2$/s (100 cSt). The compatibility can hardly be regarded as adequate.

(2) Hygroscopicity is high. The freezer oils (a) and (b) are highly hygroscopic and apt to absorb moisture. Inclusion of moisture brings about adverse affects such as a deterioration of insulation resistance and an increase of corrosiveness to metal.

Table 1:

| Conventional polyether oils and their upper critical solution temperatures | | |
|---|---|---|
| No. | Structure | Upper critical solution temperature* of a product with 100 x 10$^{-6}$ m$^2$/s (100 cSt) at 40˚C |
| (a) | $C_4H_9$-O$(C_3H_6O)_nH$ | 12˚C |
| (b) | 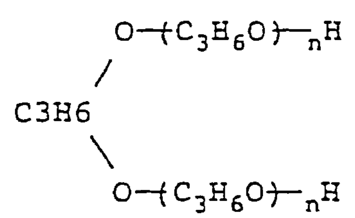 | 40˚C |
| (*) Upper critical temperature: The oil and R-134a are mixed in a weight ratio of 15:85 and sealed. The temperature is gradually raised, and the temperature at which turbidity or phase separation has started, is taken as the upper critical solution temperature. The better the compatibility, the higher the upper critical solution temperature. | | |

To solve the above problems, the present inventors have presumed that the hygroscopicity of the polyether oils is attributable to the terminal hydroxyl groups. Therefore, by using polyethers having from 1 to 3 terminal hydroxyl groups, all or a part of the terminal hydroxyl groups of such polyethers have been acylated or alkylated, and evaluation of such acylated or alkylated compounds for usefulness as freezer oils for R-134a has been conducted. As a result, it has been found that not only the hygroscopicity but also the compatibility with R-134a and the viscosity indexes have been improved. The present invention has been accomplished on the basis of this discovery.

The present invention provides a refrigeration composition, with functions of prevention of friction, abrasion and seizing of sliding portions as defined by the claims.

The disclaimer in claim 2 is based on EP-A 0 377 122.

Now, the present invention will be described in detail with reference to the preferred embodiments.

In the above definitions, the alkyl group includes, for example, a methyl group, an ethyl group, a propyl group, a butyl group, a 2-ethylhexyl group and a nonyl group. The aralkyl group includes, for example, a benzyl group, a phenylethyl group and a methylbenzyl group. The aryl group includes, for example, a phenyl group and a tolyl group.

All or a part of hydrogen atoms of these hydrocarbon groups may be substituted by halogen atoms such as fluorine atoms or chlorine atoms. A hydroxyalkyl group includes a hydroxymethyl group, a hydroxyethyl group or a hydroxybutyl group.

The acyl group may be an acyl group of the formula

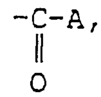

wherein A is the above-mentioned alkyl, aralkyl or aryl group.

The above-mentioned alkyl, aralkyl or aryl group may be employed also for $R^9$, $R^{10}$, $R^{11}$ and $R^{12}$ in the above-mentioned radicals of the formulas $-SO_2R^9$,

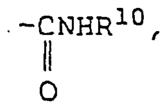

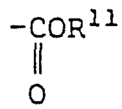 or $-Y^1-(OR^1)_p-OR^{12}$.

$Y^1$ is a residue obtained by removing both hydroxyl groups from a dicarboxylic compound having at least 3 carbon atoms. The dicarboxylic compound includes, for example, aliphatic dicarboxylic acids such as malonic acid, succinic acid, glutaric acid, adipic acid, sebacic acid, suberic acid, methyl succinic acid, methyl adipic acid, maleic acid, fumaric acid and itaconic acid; aromatic dicarboxylic acids such as phthalic acid, diphenyl dicarboxylic acid and diphenyl methane dicarboxylic acid; hydrogenated products of the above aromatic dicarboxylic acids, such as alicyclic dicarboxylic acids; and dicarboxylic acids prepared by introducing carboxyl groups to both terminals of polyalkylene glycols having a molecular weight of from 50 to 1,000.

$X^1$ in the formula (2) is preferably a residue obtained by removing hydroxyl groups from a dihydroxy compound, such as an ethylene glycol residue or a propylene glycol residue, or a residue obtained by removing hydroxyl groups from the same dicarboxylic compound as mentioned above for the definition of $Y^1$.

$X^2$ in the formula (3) is preferably a residue obtained by removing hydroxyl groups from a trihydroxy compound, such as a glycerol residue or a trimethylol propane residue, or a residue obtained by removing hydroxyl groups from a tricarboxylic compound such as trimellitic acid or trimesic acid.

$R^1$ in the formulas (1) to (3) and in the radical of the formula

$$-Y^1-(OR^1)_p-OR^{12}$$

is an alkylene group such as an ethylene group, a propylene group, a butylene group or a tetramethylene group. These alkylene groups may be present alone or in combination in the form of a random or block state. In the case of the combination, the main component is preferably a propylene group. $R^1$ in the formulas (2) and (3) may be the same or different. For the preparation of the compounds of the formulas (1), (2) and (3), the corresponding initiators are

$R^2$-OH, 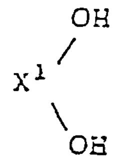 and 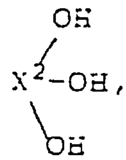

respectively, and the numbers of active hydrogen groups thereof are 1, 2 and 3, respectively. If it is attempted to obtain a compound having a kinematic viscosity within range of from $12x10^{-6}$ to $300x10^{-6}$ $m^2/s$ (12 cSt to 200 cSt) (40˚C) which is common to freezer oils for car air conditioners or refrigerators, by using an initiator having 4 or more active hydrogen groups, the numbers for $\ell$, m and n, i.e. the addition molar numbers of alkylene oxides, tend to be too small, whereby the lubricating property will be low, such being undesirable.

The compounds of the formulas (1) to (3) are desired to have a kinematic viscosity of from $12x10^{-6}$ to $300x10^{-6}$ $m^2/s$ (12 to 300 cSt) (40˚C), so that they provide adequate functions as freezer oils such as the functions for preventing friction, abrasion and seizing of sliding portions of e.g. compressors. Accordingly, it is desirable that the molecular weights of the compounds of the formulas (1) to (3) or the values for $\ell$ , m and n and the value for p in the formula

$$-Y^1-(OR^1)_p-OR^{12}$$

are selected so as to bring the kinematic viscosity within the above-mentioned range. The values for $\ell$ , m, n and p are from 6 to 30, and they may be the same or different.

The weight ratio of the compounds of the formulas (1) to (3) to R-134a is usually from 1/99 to 99/1, preferably from 5/95 to 60/40. R-134a may contain a small amount of 1,1,2,2-tetrafluoroethane (R-134). The compounds of the formulas (1) to (3) may be used alone or in combination as their mixtures.

The composition of the present invention is particularly effective when applied to a refrigerating cycle intended for freezing, for refrigerating and for air conditioning. However, it is also useful for other various heat recovery technologies such as a Rankine cycle.

The composition of the present invention has excellent heat stability and requires no stabilizer under a usual application condition. However, if an improvement of the heat stability for use under a severe condition is desired, a small amount of a stabilizer including a phosphite compound such as dimethyl phosphite, diisopropyl phosphite or diphenyl phosphite, a phosphine sulfide compound such as triphenoxy phosphine sulfide or trimethyl phosphine sulfide, and other glycidyl ethers, may be added. Further, the compounds of the formulas (1) to (3) of the present invention may be used in combination with conventional oils such as a naphthene mineral oil, a paraffin mineral oil, an alkylbenzene synthetic oil, a poly-$\alpha$-olefin synthetic oil, a fluorine type lubricating oil such as a perfluoropolyether oil or a fluorine-containing silicone oil, or polyether oils other than the polyether oils of the present invention.

Further, various additives including a phenol type or amine type antioxidant, a sulfur or phosphorus type high pressure additive, a silicone type anti-foaming agent or a metal inactivating agent such as benzotriazole, may be added to the composition of the present invention.

It is believed that in the present invention, the hydrophilicity is lowered by the modification such as acylation or alkylation of the terminal hydroxyl groups and the hygroscopicity oil is thereby lowered. The mechanism for the compatibility of the oils of the present invention with tetrafluoroethane as a cooling medium, is not clearly understood. However, a certain interaction between tetrafluoroethane and the carbonyl group of the ester bond or the like, is related thereto.

Now, the present invention will be described in further detail with reference to Examples. However, it should be understood that the present invention is by no means restricted by such specific Examples. EXAMPLES 1-1 TO 1-5 AND COMPARATIVE EXAMPLES 1-1 TO 1-5

The structures of the oils used in Examples 1-1 to 1-5 and Comparative Examples 1-1 to 1-5 and the test results for their compatibility with R-134a, hygroscopicity and kinematic viscosities at 40˚C, are shown in Table 2.

<u>Method for testing hygroscopicity:</u>

Into a Petri dish having a diameter of 150 mm, 15 g of an oil having a water content of not higher than 0.03% is introduced. The Petri dish is left open in a constant humidity and temperature room at a temperature of 20˚C under a humidity of 50%. The weight increase is calculated by the following equation in which Y is the weight (g) of the oil

upon expiration of 30 hours.

$$\text{Weight increase} = \frac{Y - 15}{15} \times 100\ (\%)$$

Table 2

| No. | Polyether | Upper critical solution temperature (°c) (Compatibility with R-134a) | Weight increase (%) (Hygroscopicity) | Kinematic viscosity at 40°C (cSt) x $10^{-6}m^2/s$ |
|---|---|---|---|---|
| Example 1-1 | 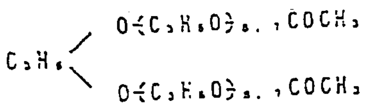 | 78 | 0.7 | 55.4 |
| Comparative Example 1-1 | 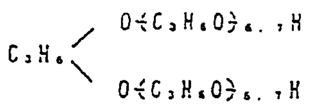 | 74 | 2.8 | 56.0 |
| Example 1-2 | 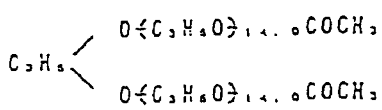 | 56 | 0.6 | 100 |
| Comparative Example 1-2 | 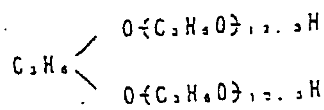 | 40 | 1.5 | 101 |
| Example 1-3 | 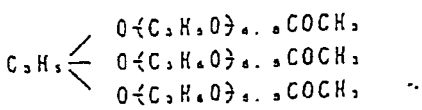 | 67 | 1.0 | 101 |
| Comparative Example 1-3 | 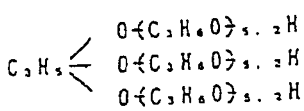 | 52 | 3.2 | 103 |
| Reference Example 1-4 | $C_4H_9\text{-}O\{C_3H_6O\}_{21.7}COCH_3$ | 68 | 0.4 | 55.8 |
| Comparative Example 1-4 | $C_4H_9\text{-}O\{C_3H_6O\}_{19.1}H$ | 55 | 1.3 | 56.1 |
| Example 1-5 | 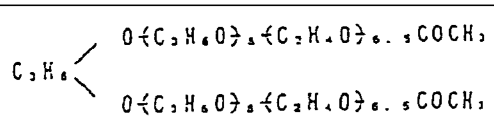 | 51 | 1.2 | 102 |
| Comparative Example 1-5 | 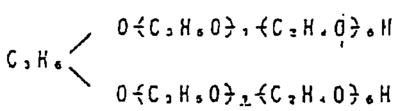 | 44 | 2.9 | 104 |

Reference EXAMPLES 2-1 TO 2-7 AND COMPARATIVE EXAMPLE 2-1

Compounds (1) as identified in Tables 3 and 4 were tested for the solubility in R-134a and the stability.

A compound (1) and R-134a were sealed in a glass ampoule at a weight ratio of 30/70, and the solubility of

the compound (1) in R-134a was determined by a visual observation of whether or not phase separation was observed. The results are shown in Table 1 together with the results of the Comparative Example.

Table 3

| Compound (1): 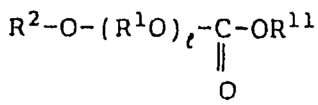 | | | | | |
|---|---|---|---|---|---|
| | Compound (1) | | | Kinematic viscosity** | Solubility |
| | $R^2$ | $R^1$ | $R^{11}$ | | |
| Example 2-1*** | Butyl | Propylene | $C_2H_5$ | 32 | Dissolved |
| Example 2-2*** | Butyl | Propylene | $C_3H_7$ | 35 | Dissolved |
| Example 2-3*** | Butyl | Propylene | $C_3H_7$ | 62 | Dissolved |
| Example 2-4*** | Butyl | Propylene | $C_3H_7$ | 102 | Dissolved |
| Example 2-5*** | Butyl | Propylene | $C_4H_9$ | 35 | Dissolved |
| Example 2-6*** | Butyl | Propylene | $C_4H_9$ | 56 | Dissolved |
| Example 2-7*** | Butyl | Propylene | $C_5H_{11}$ | 55 | Dissolved |
| Comparative Example 2-1 | Suniso 4GS* | | | 56 | Insoluble |

* Naphthene oil, manufactured by Nippon Sun Petroleum Corporation.
** x $10^{-6}$ $m^2$/s (cSt), at 40˚C
*** Reference example, not covered by the warding of the claims

A compound (1) and R-134a were sealed in a SUS316 pressure container in a weight ratio of 50/50 together with SS41 and Cu as representative metals and left to stand for 14 days at a high temperature of 175˚C in a constant temperature tank. After the test, deterioration of the compound (1), R-134a and the metals was determined in comparison with the deterioration of the conventional combination of R-12 and Sniso 4GS. The results are shown in Table 4.

Table 4

| | Compound (1) | | | Kinematic viscosity** | Stability |
|---|---|---|---|---|---|
| | $R^2$ | $R^1$ | $R^{11}$ | | |
| Example 2-1*** | Butyl | Propylene | $C_2H_5$ | 32 | Good |
| Example 2-2*** | Butyl | Propylene | $C_3H_7$ | 35 | Good |
| Example 2-3*** | Butyl | Propylene | $C_3H_7$ | 62 | Good |
| Example 2-4*** | Butyl | Propylene | $C_3H_7$ | 102 | Good |
| Example 2-5*** | Butyl | Propylene | $C_4H_9$ | 35 | Good |
| Example 2-6*** | Butyl | Propylene | $C_4H_9$ | 56 | Good |
| Example 2-7*** | Butyl | Propylene | $C_5H_{11}$ | 55 | Good |
| Reference Example | Suniso 4GS* | | | 56 | Good |

* Naphthene oil, manufactured by Nippon Sun Petroleum Corporation.
** x $10^{-6}$ $m^2$/s (cSt) at 40˚C
*** Reference example, not covered by the warding of the claims

EXAMPLES 3-1 TO 3-9 AND COMPARATIVE EXAMPLE 3-1

Compounds (2) as identified in Tables 5 and 6 were tested for the solubility in R-134a and the stability.

A compound (2) and R-134a were sealed in a glass ampoule in a weight ratio of 30/70, and the solubility of the compound (2) in R-134a was determined by a visual observation of whether or not phase separation was observed. The results are shown in Table 5 together with the Comparative Example.

Table 5

Compound (2): 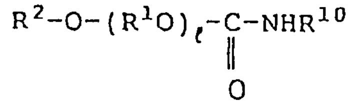

| | Compound (2) | | | Kinematic viscosity** | Solubility |
|---|---|---|---|---|---|
| | $R^2$ | $R^1$ | $R^{10}$ | | |
| Example 3-1 | Butyl | Propylene | $CH_3$ | 32 | Dissolved |
| Example 3-2 | Butyl | Propylene | $CH_3$ | 55 | Dissolved |
| Example 3-3 | Butyl | Propylene | $CH_3$ | 102 | Dissolved |
| Example 3-4 | Butyl | Propylene | $C_2H_5$ | 56 | Dissolved |
| Example 3-5 | Butyl | Propylene | $C_6H_5CH_2$ | 55 | Dissolved |
| Example 3-6 | Butyl | Propylene | $C_6H_5CH_2CH_2$ | 53 | Dissolved |
| Example 3-7 | Butyl | Propylene | $C_6H_5$ | 55 | Dissolved |
| Example 3-8 | Butyl | Propylene | $CH_3C_6H_4$ | 60 | Dissolved |
| Example 3-9 | Butyl | Propylene | $(CH_3)_2C_6H_3$ | 62 | Dissolved |
| Comparative Example 3-1 | Suniso 4GS* | | | 56 | Insoluble |

* Naphthene oil, manufactured by Nippon Sun Petroleum Corporation.
** x $10^{-6}$ $m^2/s$ (cSt) at 40˚C

A compound (2) and R-134a were sealed in a SUS316 pressure container in a weight ratio of 50/50 together with SS41 and Cu as representative metals and left to stand for 14 days at a high temperature of 175˚C in a constant temperature tank. After the test, deterioration of the compound (2), R-134a and the metals was ascertained in comparison with the deterioration of a conventional combination of R-12 and Sniso 4GS. The results are shown in Table 6.

Table 6

| | Compound (2) | | | Kinematic viscosity** | Stability |
|---|---|---|---|---|---|
| | $R^2$ | $R^1$ | $R^{10}$ | | |
| Example 3-1 | Butyl | Propylene | $CH_3$ | 32 | Good |
| Example 3-2 | Butyl | Propylene | $CH_3$ | 55 | Good |
| Example 3-3 | Butyl | Propylene | $CH_3$ | 102 | Good |
| Example 3-4 | Butyl | Propylene | $C_2H_5$ | 56 | Good |
| Example 3-5 | Butyl | Propylene | $C_6H_5CH_2$ | 55 | Good |
| Example 3-6 | Butyl | Propylene | $C_6H_5CH_2CH_2$ | 53 | Good |
| Example 3-7 | Butyl | Propylene | $C_6H_5$ | 55 | Good |
| Example 3-8 | Butyl | Propylene | $CH_3C_6H_4$ | 60 | Good |
| Example 3-9 | Butyl | Propylene | $(CH_3)_2C_6H_3$ | 62 | Good |
| Reference Example | Suniso 4GS* | | | 56 | Good |

* Naphthene oil, manufactured by Nippon Sun Petroleum Corporation.
** x$10^{-6}m^2/s$(cSt) at 40˚C

EXAMPLES 4-1 TO 4-7 AND COMPARATIVE EXAMPLE 4-1

Compounds (3) as identified in Tables 7 and 8 were tested for the solubility in R-134a and the stability.

A compound (3) and R-134a were sealed in a glass ampoule in a weight ratio of 30/70, and the solubility of the compound (3) in R-134a was determined by a visual observation of whether or not phase separation was observed. The results are shown in Table 7 together with the Comparative Example.

Table 7

| Compound (3): $R^2-O-(R^1O)_\ell-R^3$ | | | | | |
|---|---|---|---|---|---|
| | Compound (3) | | | Kinematic viscosity** | Solubility |
| | $R^2$ | $R^1$ | $R^3$ | | |
| Example 4-1 | Butyl | Propylene | $CH_2CF_3$ | 32 | Dissolved |
| Example 4-2 | Butyl | Propylene | $CH_2CF_3$ | 55 | Dissolved |
| Example 4-3 | Butyl | Propylene | $CH_2CF(CF_3)_2$ | 35 | Dissolved |
| Example 4-4 | Butyl | Propylene | $CH_2CF(CF_3)_2$ | 62 | Dissolved |
| Example 4-5 | Butyl | Propylene | $CH_2(CF_2)_6CF_3$ | 56 | Dissolved |
| Example 4-6 | Butyl | Propylene | $CH_2(CF_2)_6CF_3$ | 102 | Dissolved |
| Example 4-7 | Butyl | Propylene | $CH_2CH(CH_3)CHCl$ | 62 | Dissolved |
| Comparative Example 4-1 | Suniso 4GS* | | | 56 | Insoluble |
| * Naphthene oil, manufactured by Nippon Sun Petroleum Corporation.<br>** x $10^{-6}$ $m^2/s$(cSt) at 40˚C | | | | | |

A compound (3) and R-134a were sealed in a SUS316 pressure container in a weight ratio of 50/50 together with SS41 and Cu as representative metals and left to stand for 14 days at a high temperature of 175˚C in a constant temperature tank. After the test, deterioration of the compound (3), R-134a and the metals was ascertained in comparison with the deterioration of a conventional combination of R-12 and Sniso 4GS. The results are shown in Table 8.

Table 8

| | Compound (3) | | | Kinematic viscosity** | Stability |
|---|---|---|---|---|---|
| | $R^2$ | $R^1$ | $R^3$ | | |
| Example 4-1 | Butyl | Propylene | $CH_2CF_3$ | 32 | Good |
| Example 4-2 | Butyl | Propylene | $CH_2CF_3$ | 55 | Good |
| Example 4-3 | Butyl | Propylene | $CH_2CF(CF_3)_2$ | 35 | Good |
| Example 4-4 | Butyl | Propylene | $CH_2CF(CF_3)_2$ | 62 | Good |
| Example 4-5 | Butyl | Propylene | $CH_2(CF_2)_6CF_3$ | 56 | Good |
| Example 4-6 | Butyl | Propylene | $CH_2(CF_2)_6CF_3$ | 102 | Good |
| Example 4-7 | Butyl | Propylene | $CH_2CH(CH_3)CHCl$ | 62 | Good |
| Reference Example | Suniso 4GS* | | | 56 | Good |
| * Naphthene oil, manufactured by Nippon Sun Petroleum Corporation.<br>** x $10^{-6}$ $m^2/s$ (cSt) at 40˚C | | | | | |

EXAMPLES 5-1 TO 5-6 AND COMPARATIVE EXAMPLES 5-1 TO 5-2

The structures of the oils used in Examples 5-1 to 5-5 and Comparative Examples 5-1, 5-2 and 5-6 and the test results for their compatibility with R-134a, hygroscopicity and kinematic viscosities at 40˚C, are shown in Table 9.

Table 9

| No. | Polyether | Upper critical solution temperature (˚c) (Compatibility with R-134a) | Kinematic viscosity at 40˚C (cSt) x $10^{-6}$ $m^2/s$ |
|---|---|---|---|
| Example 5-1 | 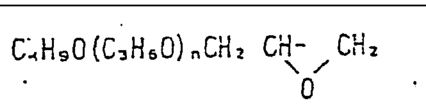 | 57 | 56 |

(continued)

| No. | Polyether | Upper critical solution temperature (˚c) (Compatibility with R-134a) | Kinematic viscosity at 40˚C (cSt) x $10^{-6}$ $m^2/s$ |
|---|---|---|---|
| Example 5-2 | 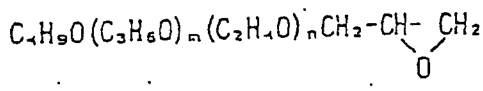 | 58 | 54 |
| Example 5-3 | 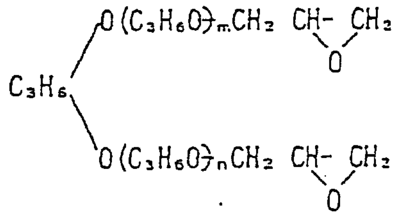 | 60 | 52 |
| Comparative Example 5-1 | $C_4H_9O(C_3H_5O)_nH$ | 53 | 56 |
| Example 5-4 | 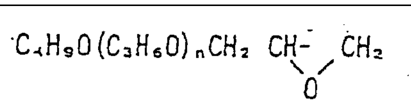 | 80 | 32 |
| Example 5-5 | 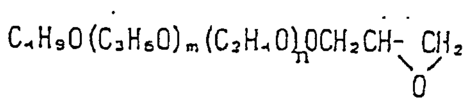 | 85 | 32 |
| Comparative Example 5-6 | 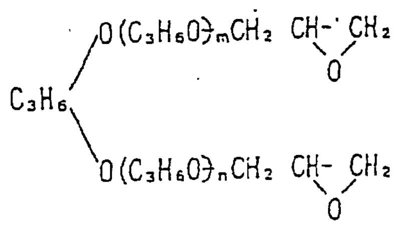 | >100 | 2 |
| Comparative Example 5-2 | $C_4H_9O(C_3H_6O)_nH$ | 74 | 32 |

EXAMPLES 6-1 TO 6-5 AND COMPARATIVE EXAMPLES 6-1 TO 6-5

The structures of the oils used in Examples 6-1 to 6-5 and Comparative Examples 6-1 to 6-5 and the test results for their compatibility with R-134a, hygroscopicity and kinematic viscosities at 40˚C, are shown in Table 10.

Table 10

| No. | Polyether | Upper critical solution temperature (˚c) (Compatibility with R-134a) | Kinematic viscosity at 40˚C (cSt) x $10^{-6}$ $m^2/s$ |
|---|---|---|---|
| Example 6-1 | 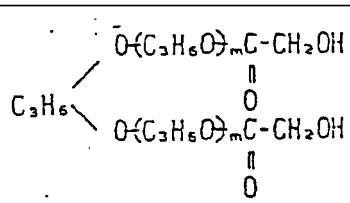 | 77 | 57 |

(continued)

| No. | Polyether | Upper critical solution temperature (˚c) (Compatibility with R-134a) | Kinematic viscosity at 40˚C (cSt) x $10^{-6}$ $m^2/s$ |
|---|---|---|---|
| Comparative Example 6-1 | 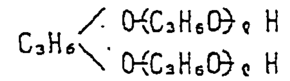 | 74 | 56 |
| Example 6-2 | 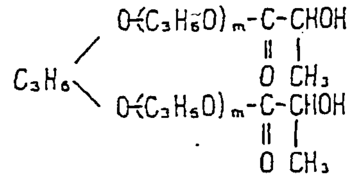 | 53 | 102 |
| Comparative Example 6-2 | 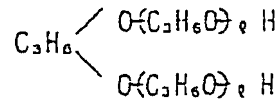 | 40 | 101 |
| Example 6-3 | 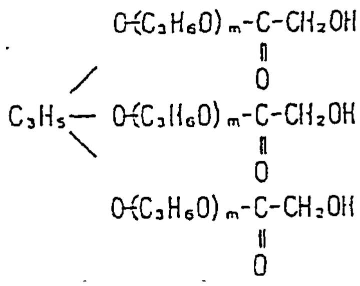 | 69 | 100 |
| Comparative Example 6-3 | 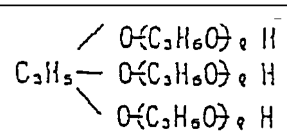 | 52 | 103 |
| Example 6-4 | 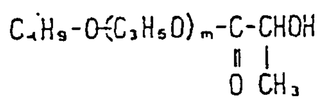 | 71 | 54 |
| Comparative Example 6-4 | $C_4H_9{=}O(C_3H_6O-)_\ell H$ | 55 | 56 |
| Example 6-5 | 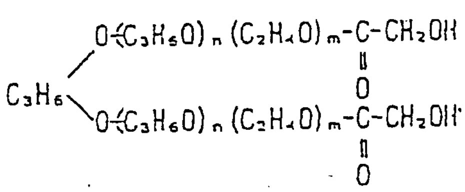 | 50 | 101 |
| Comparative Example 6-5 | 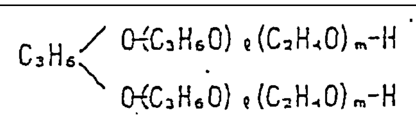 | 44 | 104 |

EXAMPLES 7-1 TO 7-5 AND COMPARATIVE EXAMPLES 7-1 TO 7-3

The structures of the oils used in Examples 7-1 to 7-5 and Comparative Examples 7-1 to 7-3 and the test results for their compatibility with R-134a, hygroscopicity and kinematic viscosities at 40˚C, are shown in Table 11.

Table 11

| No. | Polyether | Upper critical solution temperature (˚c) (Compatibility with R-134a) | Kinematic viscosity at 40˚C (cSt) x $10^{-6}$ $m^2/s$ |
|---|---|---|---|
| Example 7-1 | 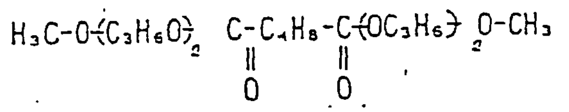 | 82 | 55 |
| Example 7-2 | 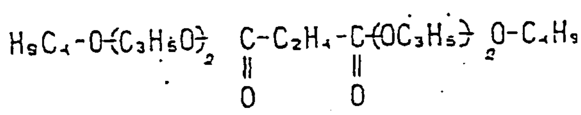 | 79 | 56 |
| Example 7-3 | 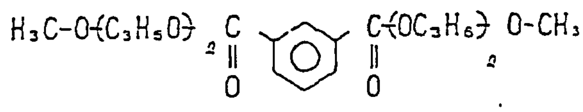 | 80 | 57 |
| Comparative Example 7-1 | 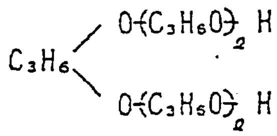 | 74 | 56 |
| Example 7-4 | 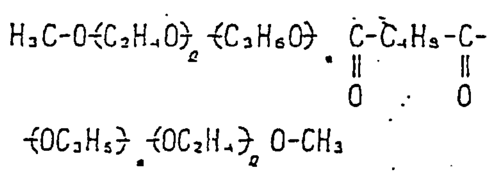 | 93 | 33 |
| Comparative Example 7-2 | $C_4H_9$-O{$C_3H_6$O}$_\ell$ H | 74 | 32 |
| Example 7-5 | 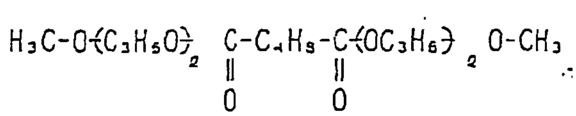 | 55 | 101 |
| Comparative Example 7-3 | 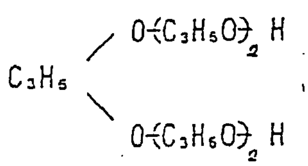 | 40 | 101 |

EXAMPLES B-1 TO 8-5 AND COMPARATIVE EXAMPLES 8-1 TO 8-4

The structures of the oils used in Examples 8-1 to 8-5 and Comparative Examples 8-1 to 8-5 and the test results for their compatibility with R-134a, hygroscopicity and kinematic viscosities at 40˚C, are shown in Table 12.

Table 12

| No. | Polyether | Kinematic viscosity at 40˚C (cSt) x $10^{-6}$ $m^2/s$ | Upper critical solution temperature (˚c) (Compatibility with R-134a) | Weight increase (%) (Hygroscopicity) |
|---|---|---|---|---|
| Example 8-1 | 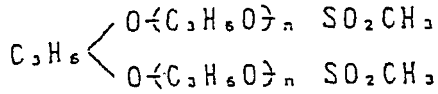 | 56.0 | 80 | 0.7 |
| Comparative Example 8-1 | 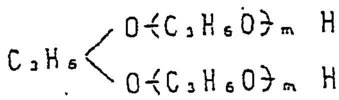 | 56.0 | 74 | 2.8 |
| Example 8-2 | 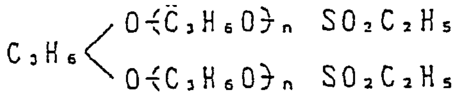 | 100 | 58 | 0.6 |
| Comparative Example 8-2 | 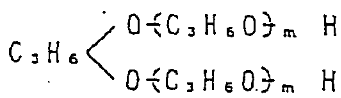 | 101 | 40 | 1.5 |
| Example 8-3 | 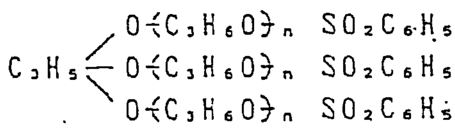 | 100 | 63 | 0.8 |
| Comparative Example 8-3 | 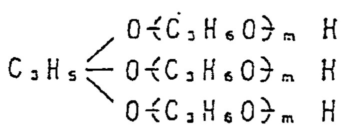 | 103 | 52 | 3.2 |
| Example 8-4 | 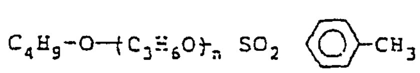 | 56 | 63 | 0.4 |
| Example 8-5 | 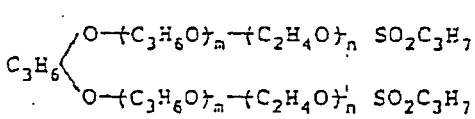 | 100 | 53 | 1.0 |
| Comparative Example 8-4 | 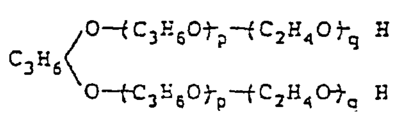 | 104 | 44 | 2.9 |

EXAMPLES 9-1 TO 9-6 AND COMPARATIVE EXAMPLES 9-1 TO 9-6

The structures of the oils used in Examples 9-1 to 9-6 and Comparative Examples 9-1 to 9-6 and the test results for their compatibility with R-134a, hygroscopicity, viscosity indices and kinematic viscosities at 40˚C, are shown in Table 13.

Table 13

| No. | Polyether | Weight increase (%) (Hygroscopicity) | Viscosity index (VI) | Compatibility with R-134a | Kinematic viscosity (cSt/ 40˚C) x$10^{-6}m^2/s$ |
|---|---|---|---|---|---|
| Example 9-1 | 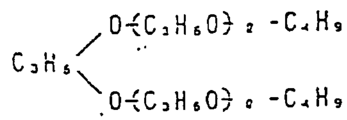 | 0.9 | 162 | Dissolved | 59 |
| Comparative Example 9-1 | 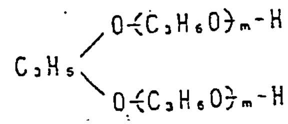 | 2.8 | 135 | Dissolved | 56 |
| Example 9-2 | 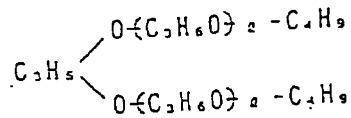 | 0.7 | 196 | Dissolved | 101 |
| Comparative Example 9-2 | 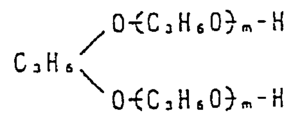 | 1.5 | 170 | Dissolved | 101 |
| Example 9-3 | 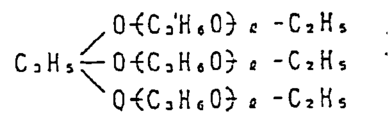 | 1.4 | 138 | Dissolved | 100 |
| Comparative Example 9-3 | 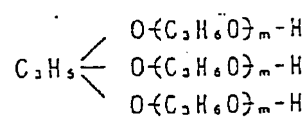 | 3.2 | 118 | Dissolved | 103 |
| Example 9-4 | $C_4H_9$-O{$C_3H_6$O}$_\ell$ -$CH_3$ | 0.5 | 211 | Dissolved | 57 |
| Comparative Example 9-4 | $C_4H_9$-O{$C_3H_6$O}$_m$-H | 1.3 | 187 | Dissolved | 56 |
| Example 9-5 | 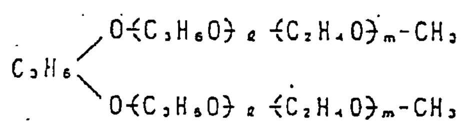 | 0.9 | 245 | Dissolved | 101 |

(continued)

| No. | Polyether | Weight increase (%) (Hygroscopicity) | Viscosity index (VI) | Compatibility with R-134a | Kinematic viscosity (cSt/ 40˚C) x$10^{-6}m^2/s$ |
|---|---|---|---|---|---|
| Comparative Example 9-5 | 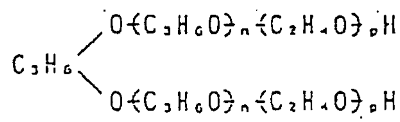 | 2.9 | 228 | Dissolved | 104 |
| Comparative Example 9-6 | Suniso 4SG | - | - | Insoluble | 56 |
| Example 9-6 | $CH_3$-O-$(C_3H_6O)_n$-$CH_3$ | 0.7 | 214 | Dissolved | 55 |

Viscosity index:

The viscosity index is a value representing the temperature dependency of the viscosity of a lubricating oil. The larger the value, the smaller the change of the viscosity due to the temperature, and accordingly the better the lubricating properties.

Compatibility with R-134a:

An oil and R-134a are mixed in a weight ratio of 15:85 and sealed. The temperature is maintained at 25˚C, and the solubility is visually observed.

EXAMPLES 10-1 TO 10-5 AND COMPARATIVE EXAMPLES 10-1 TO 10-6

The structures of the oils used in Examples 10-1 to 10-5 and Comparative Examples 10-1 to 10-6 and the test results for their compatibility with R-134a, hygroscopicity and kinematic viscosities at 40˚C, are shown in Table 14.

Table 14

| No. | Polyether | Upper critical solution temperature (˚c) (Compatibility with R-134a) | Kinematic viscosity at 40˚C (cSt) x $10^{-6} m^2/s$ |
|---|---|---|---|
| Example 10-1 | 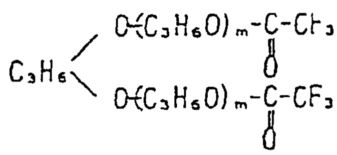 | 78 | 55 |
| Comparative Example 10-1 | 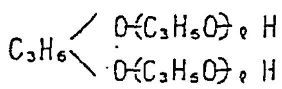 | 74 | 56 |
| Example 10-2 | 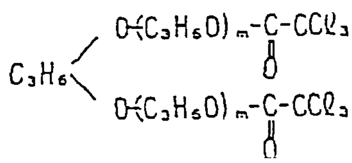 | 58 | 101 |
| Comparative Example 10-2 | 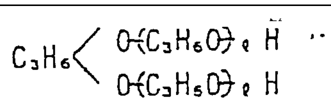 | 40 | 101 |
| Example 10-3 | 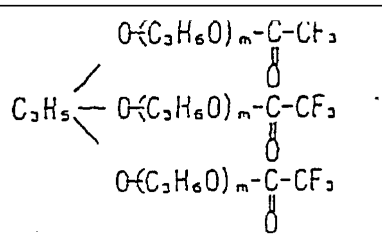 | 67 | 102 |
| Comparative Example 10-3 | 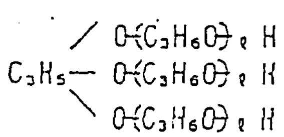 | 52 | 103 |
| Example 10-4 | 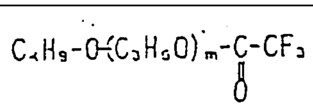 | 61 | 57 |
| Comparative Example 10-4 | $C_4H_9\text{-}O(C_3H_6O)_{\ell}\ H$ | 55 | 56 |

(continued)

| No. | Polyether | Upper critical solution temperature (˚c) (Compatibility with R-134a) | Kinematic viscosity at 40˚C (cSt) x $10^{-6} m^2/s$ |
|---|---|---|---|
| Example 10-5 | 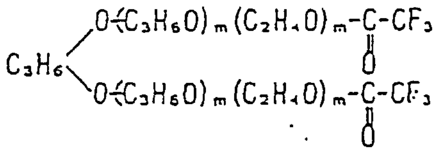 | 52 | 100 |
| Comparative Example 10-5 | 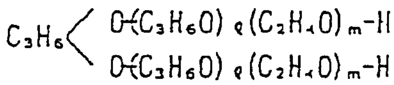 | 44 | 104 |
| Example 10-6 | 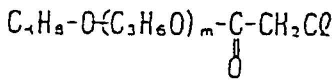 | 41 | 100 |
| Comparative Example 10-6 | $C_4H_9-O(C_3H_6O)_\ell-H$ | 12 | 101 |

The compositions of the present invention provide good compatibility of tetrafluoroethane and polyether oils, and they are capable of adequately providing functions such as the prevention of the friction, abrasion and seizing of sliding portions of e.g. compressors. Further, their hygroscopicity is low, and inclusion of moisture can be minimized, whereby a decrease of insulation resistance can be prevented, and the progress of corrosion of a metal such as a copper pipe by the moisture can be prevented.

## Claims

1. A refrigeration composition with functions of prevention of friction, abrasion and seizing of sliding portions, which comprises a tetrafluoroethane and at least one polyether selected from the group consisting of:

(1) $X^1-O-(R^1O)_\ell-R^2$

(2) 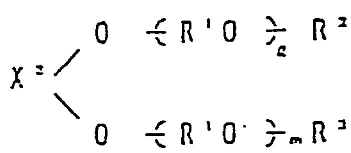

(3) 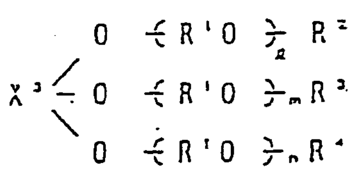

wherein $R^1$ is an alkylene group, each of $X^1$, $R^2$, $R^3$ and $R^4$ is an acyl group and wherein both of $X^1$ and $R^2$ in (1) or $R^2$ and $R^3$ in (2) or all of $R^2$, $R^3$ and $R^4$ in (3) are the same acyl groups, $X^2$ is a residue obtained by removing hydroxyl groups from a dihydroxy compound, $X^3$ is a residue obtained by removing hydroxyl groups from a trihydroxy

compound, and
$\ell$, m and n which may be the same or different are integers which bring the kinematic viscosity of the compounds of the formulas (1) to (3) to a level of from $12 \cdot 10^{-6}$ to $300 \cdot 10^{-6}$ $m^2/s$ (12 to 300 cst) at 40˚C.

**2.** A refrigeration composition with functions of prevention of friction, abrasion and seizing of sliding portions, which comprises a tetrafluoroethane and at least one polyether selected from the group consisting of:

(1) 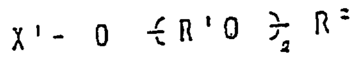

(2) 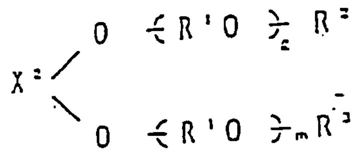

(3) 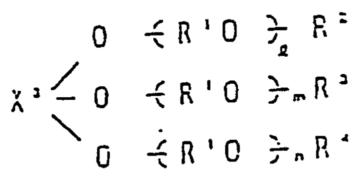

wherein $R^1$ is an alkylene group, each of $X^1$, $R^2$, $R^3$ and $R^4$ is an alkyl group and wherein both of $X^1$ and $R^2$ in (1) or $R^2$ and $R^3$ in (2) or all of $R^2$, $R^3$ and $R^4$ in (3) are the same alkyl groups, $X^2$ is a residue obtained by removing hydroxyl groups from a dihydroxy compound, $X^3$ is a residue obtained by removing hydroxyl groups from a trihydroxy compound, and $\ell$ , m and n which may be the same or different are integers which bring the kinematic viscosity of the compounds of the formulas (1) to (3) to a level of from $12 \cdot 10^{-6}$ to $300 \cdot 10^{-6}$ $m^2/s$ (12 to 300 cst) at 40˚C, excent for

(a) a polyoxypropyleneglycol diethylether obtained from a polyoxypropyleneglycol having an average molecular weight of 1100 ; and
(b) a polyoxypropyleneglycol triethylether obtained from a polyoxypropyleneglycol having an average molecular weight of 1000 and being obtained by polymerizing propyleneoxide using glycerol as an initiator.

**3.** A refrigeration with functions of prevention of friction, abrasion and seizing of sliding portions which comprises 1,1,1,2-tetrafluoroethane and a compound represented by the formula:

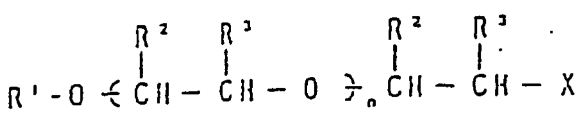 · · ( I )

wherein X is a halogen atom, $R^1$ is an alkyl group, an aralkyl group or an aryl group, each of $R^2$ and $R^3$ is a hydrogen atom or a lower alkyl group, and n is an integer which brings the viscosity of the compound (I) to a level of from $12 \cdot 10^{-6}$ to $300 \cdot 10^{-6}$ $m^2/s$ (12 to 300 cst) at 40˚C.

**4.** A refrigeration with functions of prevention of friction, abrasion and seizing of sliding portions which comprises 1,1,1,2-tetrafluoroethane and a compound represented by the formula:

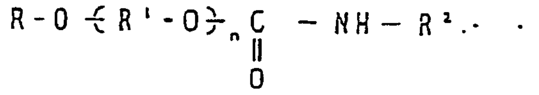 (I)

wherein R is an alkyl group, an aralkyl group or an aryl group, $R^1$ is an alkylene group, $R^2$ is an alkyl group, an aralkyl group or an aryl group, and n is an integer which brings the viscosity of the compound (I) to a level of from $12 \cdot 10^{-6}$ to $300 \cdot 16^{-6}$ $m^2/s$ (12 to 300 cst) at 40°C.

**5.** A refrigeration composition with functions of prevention of friction, abrasion and seizing of sliding portions, which comprises 1,1,1,2-tetrafluoroethane and a compound represented by the formula:

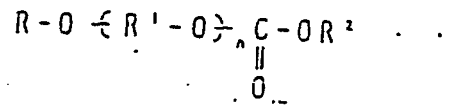 (I)

wherein R is an alkyl group, an aralkyl group or an aryl group, $R^1$ is an alkylene group, $R^2$ is an alkyl group, an aralkyl group or an aryl group, and n is an integer which brings the viscosity of the compound (I) to a level of from $12 \cdot 10^{-6}$ to $300 \cdot 10^{-6}$ $m^2/s$ (12 to 300 cst) at 40°C.

**6.** A refrigeration composition with functions of prevention of friction, abrasion and seizing of sliding portions, which comprises 1,1,1,2-tetrafluoroethane and a compound represented by the formula:

$$R\text{-}O\{R^1\text{-}O\}_nR^2 \qquad (I)$$

wherein R is an alkyl group, an aralkyl group or an aryl group, $R^1$ is an alkylene group, $R^2$ is a fluorine containing alkyl group, and n is an integer which brings the viscosity of the compound (I) to a level of from $12 \cdot 10^{-6}$ to $300 \cdot 10^{-6}$ $m^2/s$ (12 to 300 cst) at 40°C.

**7.** A refrigeration composition with functions of prevention of friction, abrasion and seizing of sliding portions, which comprises a tetrafluoroethane and at least one polyether selected from the group consisting of:

(1) 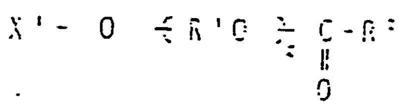

(2) 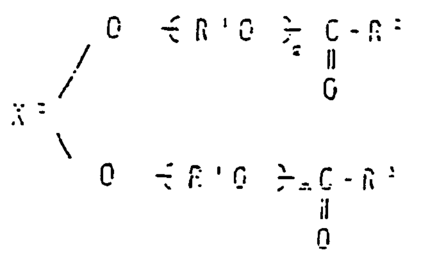

(3) 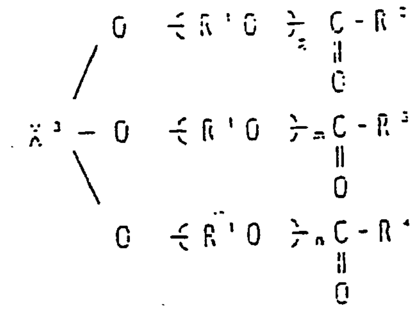

wherein $R^1$ is an alkylene group, each of $R^2$, $R^3$ and $R^4$ which may be the same or different is a hydroxyalkyl group, $X^1$ is a hydrogen atom, or a hydroxyalkyl group, $X^2$ is a residue obtained by removing hydroxyl groups from a dihydroxy compound, $X^3$ is a residue obtained by removing hydroxyl groups from a trihydroxy compound, and $\ell$ , m and n which may be the same or different are integers which bring the kinematic viscosity of the compounds of the formulas (1) to (3) to a level of from $12 \cdot 10^{-6}$ to $300 \cdot 10^{-6}$ $m^2/s$ (12 to 300 cst) at 40°C.

**8.** A refrigeration composition with functions of prevention of friction, abrasion and seizing of sliding portions, which comprises a tetrafluoroethane and at least one polyether selected from the group consisting of:

(1) 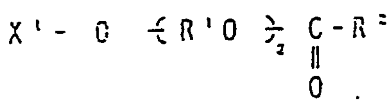

(2) 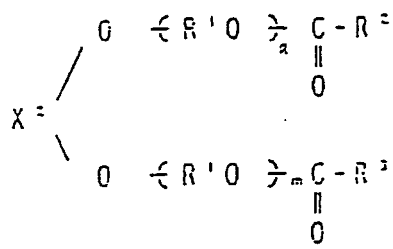

(3) 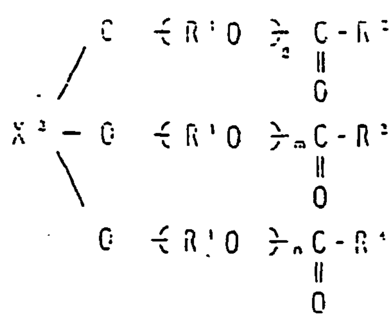

wherein $R^1$ is an alkylene group, each of $R^2$, $R^3$ and $R^4$ which may be the same or different is an alkyl group, an aralkyl group or an aryl group which groups are substituted by at least one halogen atom, $X^1$ is a hydrogen atom, or an alkyl group, an aralkyl group, or an aryl group which groups are substituted by at least one halogen atom, $X^2$ is a residue obtained by removing hydroxyl groups from a dihydroxy compound, $X^3$ is a residue obtained by removing hydroxyl groups from a trihydroxy compound, and $\ell$ , m and n which may be the same or different are integers which bring the kinematic viscosity of the compounds of the formulas (1) to (3) to a level of from $12 \cdot 10^{-6}$ to $300 \cdot 10^{-6}$ $m^2/s$ (12 to 300 cst) at 40°C.

**9.** A refrigeration composition with functions of prevention of friction, abrasion and seizing of sliding portions, which comprises a tetrafluoroethane and at least one polyether selected from the group consisting of:

(1) $X^1-O-(R^1O)_\ell-R^2$

(2) 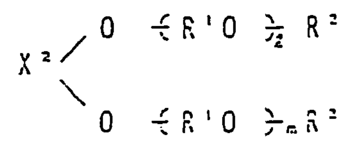

(3) 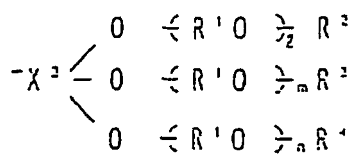

wherein $R^1$ is an alkylene group, each of $R^2$, $R^3$ and $R^4$ which may be the same or different is a glycidyl group or a hydrogen atom, provided that at least two selected from $R^2$, $R^3$ and $R^4$ are not hydrogen atoms at the same time, $\ell$ , m and n are integers which bring the kinematic viscosity of the above compounds of the formulas (1) to (3) to a level of from $12 \cdot 10^6$ to $300 \cdot 10^6$ $m^2/s$ (12 to 300 cst) at 40˚C, $X^1$ is a hydrogen atom, or a glycidyl group provided that $X^1$ and $R^2$ are not hydrogen atoms at the same time, $X^2$ is a residue obtained by removing hydroxyl groups from a dihydroxy compound, and $X^3$ is a residue obtained by removing hydroxyl groups from a trihydroxy compound.

**10.** A refrigeration composition with functions of prevention of friction, abrasion and seizing of sliding portions, which comprises a tetrafluoroethane and at least one compound selected from the group consisting of:

(1) $X^1-O-(R^1O)_\ell\ Y^1-(OR^1)_m\ O-X^2$

wherein $R^1$ is an alkylene group, each of $X^1$ and $X^2$ is an alkyl group or an aryl group, $Y^1$ is a residue of a dicarboxylic acid having at least 3 carbon atoms, and $\ell$ and m are integers which bring the kinematic viscosity of the compound of the formula (1) to a level of from $12 \cdot 10^{-6}$ to $300 \cdot 10^{-6}$ $m^2/s$ (12 to 300 cst) at 40˚C.

**11.** A refrigeration composition with functions of prevention of friction, abrasion and seizing of sliding portions,which comprises a tetrafluoroethane and at least one polyether selected from the group consisting of:

(1) $X^1-O-(R^1O)_\ell-R^2$

(2) 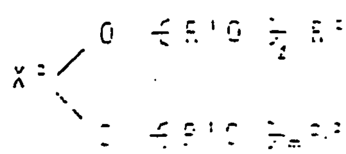

(3) 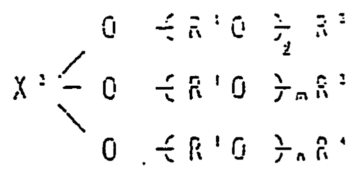

wherein $R^1$ is an alkylene group, each of $R^2$, $R^3$ and $R^4$ which may be the same or different is an alkanesulfonyl, an arenesulfonyl or a hydrogen atom, provided that at least two selected from $R^2$, $R^3$ and $R^4$ are not hydrogen atoms at the same time, $\ell$ , m and n which may be the same or different are integers which bring the kinematic viscosity of the compounds of the formulas (1) to (3) to a level of from $12 \cdot 10^{-6}$ to $300 \cdot 10^{-6}$ $m^2/s$ (12 to 300 cst) at 40°C, $X^1$ is a hydrogen atom, an alkanesulfonyl, or an arenesulfonyl, provided that $X^1$ and $R^2$ are not hydrogen atoms at the same time, $X^2$ is a residue obtained by removing hydroxyl groups from a dihydroxy compound, and $X^3$ is a residue obtained by removing hydroxyl groups from a trihydroxy compound.

**12.** The composition according to any one of claims 1, 2, or 7 to 11 wherein the tetrafluoroethane is 1,1,1,2-tetrafluoroethane.

**13.** The composition according to any one of claims 1 to 11, wherein the weight ratio of the polyether to the tetrafluoroethane is from 1/99 to 99/1.

**14.** The composition according to any one of claims 1 to 11, which further contains at least one member selected from the group consisting of a naphthene mineral oil, a paraffin mineral oil, an alkylbenzene synthetic oil, a poly-α-olefin synthetic oil and a fluorine-containing silicone oil.

**15.** The composition according to to any one of claims 1 to 11, which further contains at least one stabilizer selected from the group consisting of a phosphite compound, a phosphine sulfide compound and a glycidyl ether compound.

**16.** The composition according to any one of claims 1, 2, or 4 to 11, wherein $R^1$ in the formulas (1) to (3) is an ethylene group, a propylene group or a mixture of an ethylene group and a propylene group.

**17.** The composition according to any one of claims 1, 2, or 4 to 11, wherein $X^2$ is a propylene glycol residue.

**18.** The composition according to any one of claims 1, 2, or 4 to 11, wherein $X^3$ is a trimethylol propane residue.

**Patentansprüche**

**1.** Kühlzusammensetzung mit der Funktion, Reibung, Abrieb und Festfressen von verschiebbaren Teilen zu verhindern, die ein Tetrafluorethan und mindestens einen aus der Gruppe ausgewählten Polyether umfasst, die aus

$$X^1-O-(R^1O)_\ell-R^2 \qquad (1)$$

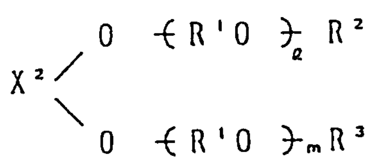 (2)

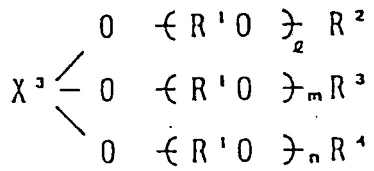 (3)

besteht, worin $R^1$ eine Alkylengruppe, jedes $X^1$, $R^2$, $R^3$ und $R^4$ eine Acylgruppe und worin sowohl $X^1$ und $R^2$ in (1) oder $R^2$ und $R^3$ in (2) oder alle von $R^2$, $R^3$ und $R^4$ in (3) gleiche Acylgruppen sind, $X^2$ ein durch Entfernen von Hydroxylgruppen von einer Dihydroxyverbindung erhältlicher Rest, $X^3$ ein durch Entfernen von Hydroxylgruppen von einer Trihydroxyverbindung erhältlicher Rest ist und $\ell$, m und n, die gleich oder verschieden sein können, ganze Zahlen sind, die die kinematische Viskosität der Verbindungen der Formeln (1) bis (3) in einen Bereich von $12 \cdot 10^{-6}$ bis $300 \cdot 10^{-6}$ $m^2/s$ (12 bis 300 cst) bei 40°C bringen.

**2.** Eine Kühlzusammensetzung mit der Funktion, Reibung, Abrieb und Festfressen von verschiebbaren Teilen zu verhindern, die ein Tetrafluorethan und mindestens einen Polyether ausgewählt aus der Gruppe

$$X^1-O\left(R^1O\right)_\ell R^2 \qquad (1)$$

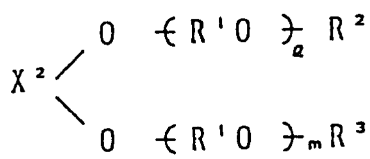 (2)

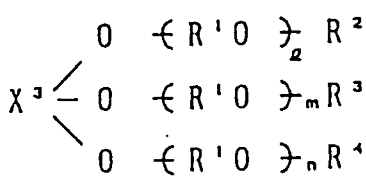 (3)

umfasst, worin $R^1$ eine Alkylengruppe, jedes $X^1$, $R^2$, $R^3$ und $R^4$ eine Alkylgruppe und worin sowohl $X^1$ und $R^2$ in (1) oder $R^2$ und $R^3$ in (2) oder alle von $R^2$, $R^3$ und $R^4$ in (3) gleiche Alkylgruppen sind, $X^2$ ein durch Entfernen von Hydroxylgruppen von einer Dihydroxyverbindung erhältlicher Rest, $X^3$ ein durch Entfernen von Hydroxylgruppen von einer Trihydroxyverbindung erhältlicher Rest ist und
$\ell$, m und n, die gleich oder verschieden sein können, ganze Zahlen sind, die die kinematische Viskosität der Verbindungen der Formels (1) bis (3) in einen Bereich von $12 \cdot 10^{-6}$ bis $300 \cdot 10^{-6}$ $m^2/s$ (12 bis 300 cst) bei 40°C bringen, mit der Ausnahme von

(a) einem Polyoxypropylenglycol-diethylether, der aus einem Polyoxypropylenglycol mit einem durchschnittlichen Molekulargewicht von 1100 erhalten wurde, und
(b) einem Polyoxypropylenglycol-triethylether, der aus einem Polyoxypropylenglycol mit einem durchschnittlichen Molekulargewicht von 1000 erhalten wurde und durch Polymerisation von Propylenoxid unter Verwendung von Glycerin als Initiator erhalten wurde.

**3.** Eine Kühlzusammensetzung mit der Funktion, Reibung, Abrieb und Festfressen von verschiebbaren Teilen zu verhindern, die 1,1,1,2-Tetrafluorethan und eine Verbindung der Formel umfasst:

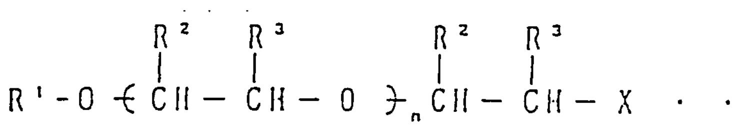 · · ( I )

worin X ein Halogenatom, $R^1$ eine Alkylgruppe, eine Aralkylgruppe oder eine Arylgruppe, jedes von $R^2$ und $R^3$ ein Wasserstoffatom oder eine niedere Alkylgruppe, und n eine ganze Zahl ist, die die Viskosität der Verbindung (I) in einen Bereich von $12 \cdot 10^{-6}$ bis $300 \cdot 10^{-6}$ $m^2/s$ (12 bis 300 cst) bei 40˚C bringt.

**4.** Eine Kühlzusammensetzung mit der Funktion, Reibung, Abrieb und Festfressen von verschiebbaren Teilen zu verhindern, die 1,1,1,2-Tetrafluorethan und eine Verbindung der Formel umfasst:

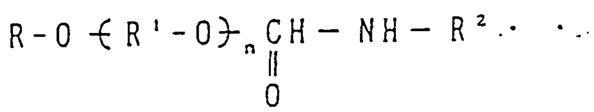 ( I )

worin R eine Alkylgruppe, eine Aralkylgruppe oder eine Arylgruppe ist, $R^1$ eine Alkylengruppe, $R^2$ eine Alkylgruppe, eine Aralkylgruppe oder eine Arylgruppe, und n eine ganze Zahl ist, die die Viskosität der Verbindung (I) in einen Bereich von $12 \cdot 10^{-6}$ bis $300 \cdot 10^{-6}$ $m^2/s$ (12 bis 300 cst) bei 40˚C bringt.

**5.** Eine Kühlzusammensetzung mit der Funktion, Reibung, Abrieb und Festfressen von verschiebbaren Teilen zu verhindern, die 1,1,1,2-Tetrafluorethan und eine Verbindung der Formel umfasst:

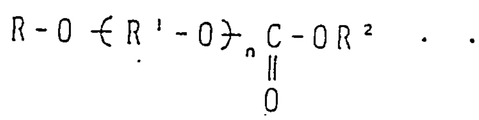 ( I )

worin R eine Alkylgruppe, eine Aralkylgruppe oder eine Arylgruppe, $R^1$ eine Alkylengruppe, $R^2$ eine Alkylgruppe, eine Aralkylgruppe oder eine Arylgruppe, und n eine ganze Zahl ist, die die Viskosität der Verbindung (I) in einen Bereich von $12 \cdot 10^{-6}$ bis $300 \cdot 10^{-6}$ $m^2/s$ (12 bis 300 cst) bei 40˚C bringt.

**6.** Eine Kühlzusammensetzung mit der Funktion, Reibung, Abrieb und Festfressen von verschiebbaren Teilen zu verhindern, die 1, 1, 1,2-Tetrafluorethan und eine Verbindung der Formel umfasst:

$$R\text{-}O\{R^1\text{-}O\}_nR^2 \qquad (I)$$

worin R eine Alkylgruppe, eine Aralkylgruppe oder eine Arylgruppe, $R^1$ eine Alkylengruppe, $R^2$ eine fluorhaltige Alkylgruppe, und n eine ganze Zahl ist, die die Viskosität der Verbindung (I) in einen Bereich von $12 \cdot 10^{-6}$ bis $300 \cdot 10^{-6}$ $m^2/s$ (12 bis 300 cst) bei 40˚C bringt.

**7.** Eine Kühlzusammensetzung mit der Funktion, Reibung, Abrieb und Festfressen von verschiebbaren Teilen zu verhindern, die ein Tetrafluorethan und mindestens einen Polyether ausgewählt aus der Gruppe bestehend aus

( 1 ) 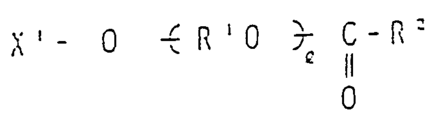

(2) 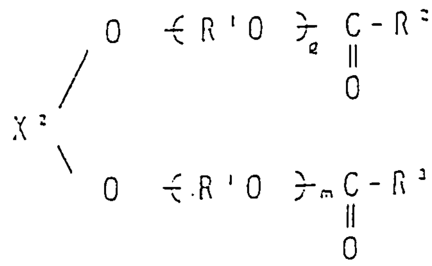

(3) 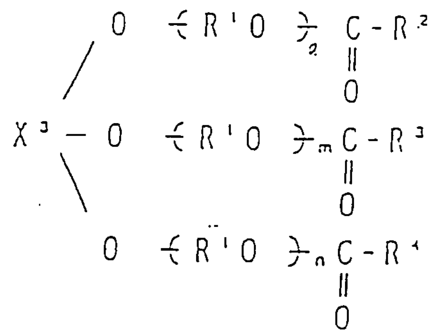

umfasst,
worin $R^1$ eine Alkylengruppe, jedes $R^2$, $R^3$ und $R^4$, die gleich oder verschieden sein können, eine Hydroxyalkylgruppe, $X^1$ ein Wasserstoffatom oder eine Hydroxyalkylgruppe, $X^2$ ein durch Entfernen von Hydroxylgruppen von einer Dihydroxyverbindung erhältlicher Rest, $X^3$ ein durch Entfernen von Hydroxylgruppen von einer Trihydroxyverbindung erhältlicher Rest und
$\ell$, m und n, die gleich oder verschieden sein können, ganze Zahlen sind, die die kinematische Viskosität der Verbindungen der Formels (1) bis (3) in einen Bereich von $12 \cdot 10^{-6}$ bis $300 \cdot 10^{-6}$ $m^2/s$ (12 bis 300 cst) bei 40°C.

**8.** Eine Kühlzusammensetzung mit der Funktion, Reibung, Abrieb und Festfressen von verschiebbaren Teilen zu verhindern, die ein Tetrafluorethan und mindestens einen Polyether ausgewählt aus der Gruppe bestehend aus

(1) 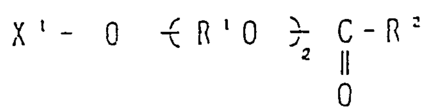

(2) 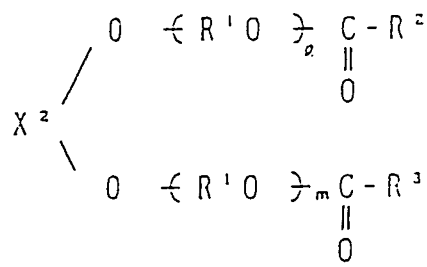

(3) 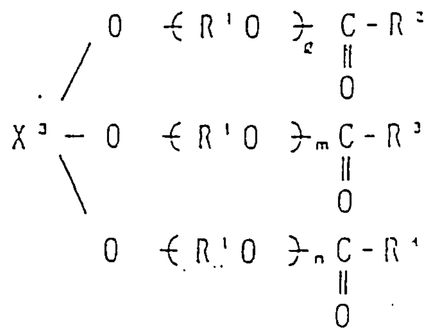

umfasst,
worin $R^1$ eine Alkylengruppe, jedes $R^2$, $R^3$ und $R^4$, die gleich oder verschieden sein können, eine Alkylgruppe, eine Aralkylgruppe oder eine Arylgruppe, die durch mindestens ein Halogenatom substituiert sind, $X^1$ ein Wasserstoffatom oder eine Alkylgruppe, eine Aralkylgruppe oder eine Arylgruppe, wobei diese Gruppen durch mindestens ein Halogenatom substituiert sind, $X^2$ ein durch Entfernen von Hydroxylgruppen von einer Dihydroxyverbindung erhältlicher Rest, $X^3$ ist ein durch Entfernen von Hydroxylgruppen von einer Trihydroxyverbindung erhältlicher Rest und $\ell$, m und n, die gleich oder verschieden sein können, ganze Zahlen sind, die die kinematische Viskosität der Verbindungen der Formeln (1) bis (3) in einen Bereich von $12 \cdot 10^{-6}$ bis $300 \cdot 10^{-6}$ $m^2/s$ (12 bis 300 cst) bei 40°C.

**9.** Eine Kühlzusammensetzung mit der Funktion, Reibung, Abrieb und Festfressen von verschiebbaren Teilen zu verhindern, die ein Tetrafluorethan und mindestens einen Polyether ausgewählt aus der Gruppe bestehend aus

$$X^1-O-(R^1O)_{\ell}-R^2 \qquad (1)$$

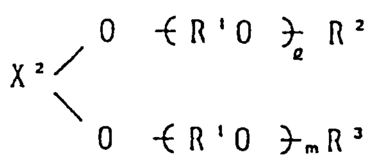 (2)

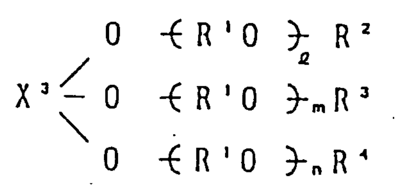 (3)

umfasst, worin $R^1$ eine Alkylengruppe ist, jedes $R^2$, $R^3$ und $R^4$, die gleich oder verschieden sein können, eine Glycidylgruppe oder ein Wasserstoffatom ist, mit der Bedingung, dass mindestens zwei ausgewählt aus $R^2$, $R^3$ und $R^4$ nicht gleichzeitig Wasserstoffatome sind, $\ell$, m und n ganze Zahlen sind, die die kinematische Viskosität der Verbindungen der Formeln(1) bis (3) in einen Bereich von $12 \cdot 10^{-6}$ bis $300 \cdot 10^{-6}$ $m^2/s$ (12 bis 300 cst) bei 40°C bringen, $X^1$ ein Wasserstoffatom oder eine Glycdiylgruppe ist, mit der Bedingung, dass $X^1$ und $R^2$ nicht gleichzeitig Wasserstoffatome sind, $X^2$ ein durch Entfernen von Hydroxylgruppen von einer Dihydroxyverbindung erhältlicher Rest und $X^3$ ein durch Entfernen von Hydroxylgruppen von einer Trihydroxyverbindung erhältlicher Rest ist.

**10.** Eine Kühlzusammensetzung mit der Funktion, Reibung, Abrieb und Festfressen von verschiebbaren Teilen zu verhindern, die ein Tetrafluorethan und mindestens eine Verbindung ausgewählt aus der Gruppe bestehend aus

$$(1) \quad X^1-O(R^1O)_{\ell}\,Y^1(OR^1)_m\,O-X^2$$

ist, worin $R^1$ eine Alkylengruppe, jedes von $X^1$ und $X^2$ eine Alkylgruppe oder eine Arylgruppe, $Y^1$ ein Rest einer Dicarbonsäure mit mindestens 3 Kohlenstoffatomen ist und $\ell$ und m ganze Zahlen sind, die die kinematische Viskosität der Verbindungen der Formel (1) in einen Bereich von $12 \cdot 10^{-6}$ bis $300 \cdot 10^{-6}$ $m^2/s$ (12 bis 300 cst) bei 40°C bringt.

**11.** Eine Kühlzusammensetzung mit der Funktion, Reibung, Abrieb und Festfressen von verschiebbaren Teilen zu verhindern, die ein Tetrafluorethan und mindestens einen Polyether ausgewählt aus der Gruppe bestehend aus

$$X^1-O(R^1O)_{\ell}R^2 \qquad (1)$$

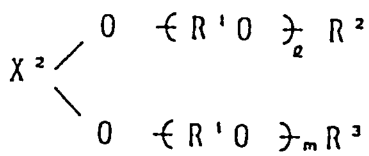

(2)

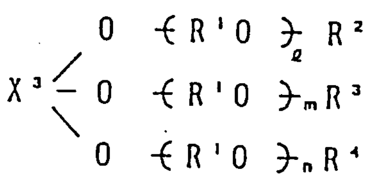

(3)

umfasst, worin $R^1$ eine Alkylengruppe ist, jedes $R^2$, $R^3$ und $R^4$, die gleich oder verschieden ein können, eine Alkansulfonylgruppe, eine Arensulfonylgruppe oder ein Wasserstoffatom ist, mit der Bedingung, dass mindestens zwei ausgewählt aus $R^2$, $R^3$ und $R^4$ nicht gleichzeitig Wasserstoffatome sind, $\ell$, m und n, die gleich oder verschieden sein können, ganze Zahlen sind, die die kinematische Viskosität der Verbindungen der Formeln(1) bis (3) in einen Bereich von $12 \cdot 10^{-6}$ bis $300 \cdot 10^{-6}$ $m^2/s$ (12 bis 3 00 cst) bei 40°C bringen,
$X^1$ ein Wasserstoffatom, eine Alkansulfonylgruppe oder eine Arensulfonylgruppe ist, mit der Bedingung, dass $X^1$ und $R^2$ nicht gleichzeitig Wasserstoffatome sind, $X^2$ ein durch Entfernen von Hydroxylgruppen von einer Dihydroxyverbindung erhältlicher Rest und $X^3$ ein durch Entfernen von Hydroxylgruppen von einer Trihydroxyverbindung erhältlicher Rest ist.

**12.** Die Zusammensetzung gemäß einem der Ansprüche 1, 2 oder 7 bis 11, wobei das Tetrafluorethan 1,1,1,2-Tetrafluorethan ist.

**13.** Die Zusammensetzung gemäß einem der Ansprüche 1 bis 11, wobei das Gewichtsverhältnis des Polyethers zu dem Tetrafluorethan 1/99 bis 99/1 ist.

**14.** Die Zusammensetzung gemäß einem der Ansprüche 1 bis 11, die ferner mindestens ein Element ausgewählt aus der Gruppe bestehend aus einem Naphthen-Mineralöl, einem Paraffinöl, einem synthetischen Alkylbenzolöl, einem synthetischen Poly-α-Olefinöl und einem fluorhaltigen Siliconöl enthält.

**15.** Die Zusammensetzung gemäß einem der Ansprüche 1 bis 11, die ferner mindestens einen Stabilisator ausgewählt aus der Gruppe bestehend aus einer Phosphitverbindung, einer Phosphinsulfidverbindung und einer Glycidyletherverbindung enthält.

**16.** Die Zusammensetzung gemäß einem der Ansprüche 1, 2 oder 4 bis 11, worin $R^1$ in den Formeln (1) bis (3) eine Ethylengruppe, eine Propylengruppe oder eine Mischung aus einer Ethylengruppe und einer Propylengruppe ist.

**17.** Die Zusammensetzung gemäß einem der Ansprüche 1, 2 oder 4 bis 11, worin $X^2$ ein Propylenglycolrest ist.

**18.** Die Zusammensetzung gemäß einem der Ansprüche 1, 2 oder 4 bis 11, worin $X^3$ ein Trimethylolpropanrest ist.

**Revendications**

**1.** Composition de réfrigération avec des fonctions de prévention des frottements, de l'abrasion et du grippage de parties coulissantes, qui comprend un tétrafluoroéthane et au moins un polyéther choisi dans le groupe constitué par :

(1) $X^1-O-(R^1O)_l-R^2$

(2) 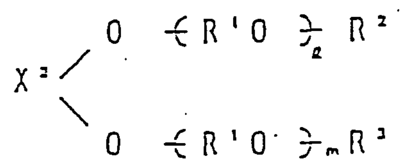

(3) 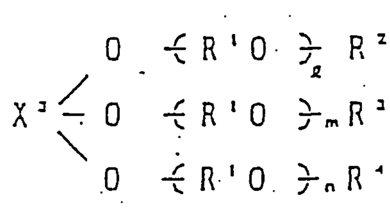

où $R^1$ est un groupe alkylène, chacun de $X^1$, $R^2$, $R^3$ et $R^4$ est un groupe acyle, et où à la fois $X^1$ et $R^2$ dans (1) ou $R^2$ et $R^3$ dans (2) ou tous les $R^2$, $R^3$ et $R^4$ dans (3) sont les mêmes groupes acyle, $X^2$ est un résidu obtenu par élimination de groupes hydroxyle d'un composé dihydroxy, $X^3$ est un résidu obtenu par élimination de groupes hydroxyle d'un composé trihydroxy, et
1, m et n, qui peuvent être identiques ou différents, sont des entiers qui amènent la viscosité cinématique des composés de formules (1) à (3) jusqu'à un niveau de $12 \cdot 10^{-6}$ à $300 \cdot 10^{-6}$ $m^2/s$ (12 à 300 cst) à 40°C.

**2.** Composition de réfrigération avec des fonctions de prévention des frottements, de l'abrasion et du grippage de parties coulissantes, qui comprend un tétrafluoroéthane et au moins un polyéther choisi dans le groupe constitué par :

(1) $X^1-O-(R^1O)_l-R^2$

(2) 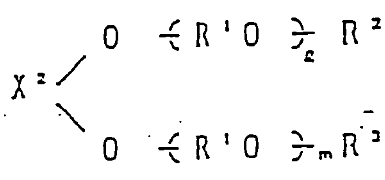

(3) 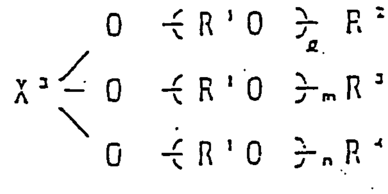

où $R^1$ est un groupe alkylène, chacun de $X^1$, $R^2$, $R^3$ et $R^4$ est un groupe alkyle, et où à la fois $X^1$ et $R^2$ dans (1) ou $R^2$ et $R^3$ dans (2) ou tous les $R^2$, $R^3$ et $R^4$ dans (3) sont les mêmes groupes alkyle, $X^2$ est un résidu obtenu par élimination de groupes hydroxyle d'un composé dihydroxy, $X^3$ est un résidu obtenu par élimination de groupes hydroxyle d'un composé trihydroxy, et 1, m et n, qui peuvent être identiques ou différents, sont des entiers qui amènent la viscosité cinématique des composés de formules (1) à (3) jusqu'à un niveau de $12 \cdot 10^{-6}$ à $300 \cdot 10^{-6}$ $m^2/s$ (12 à 300 cst) à 40°C, excepté

(a) un polyoxypropylèneglycol diéthyléther obtenu à partir d'un polyoxypropylèneglycol ayant un poids moléculaire moyen de 1100 ; et
(b) un polyoxypropylèneglycol triéthyléther obtenu à partir d'un polyoxypropylèneglycol ayant un poids moléculaire moyen de 1000 et obtenu par polymérisation d'oxyde de propylène en utilisant le glycérol en tant qu'initiateur.

3. Composition de réfrigération avec des fonctions de prévention des frottements, de l'abrasion et du grippage de parties coulissantes, qui comprend du 1,1,1,2-tétrafluoro-éthane et un composé représenté par la formule :

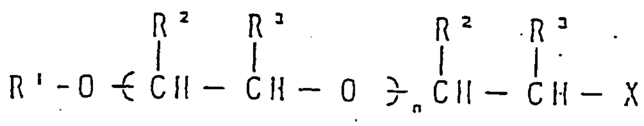 · · (I)

dans laquelle X est un atome d'halogène, $R^1$ est un groupe alkyle, un groupe aralkyle ou un groupe aryle, chacun de $R^2$ et $R^3$ est un atome d'hydrogène ou un groupe alkyle inférieur, et n est un entier qui amène la viscosité du composé (I) jusqu'à un niveau de $12 \cdot 10^{-6}$ à $300 \cdot 10^{-6}$ $m^2/s$ (12 à 300 cst) à 40°C.

4. Composition de réfrigération avec des fonctions de prévention des frottements, de l'abrasion et du grippage de parties coulissantes, qui comprend du 1,1,1,2-tétrafluoro-éthane et un composé représenté par la formule :

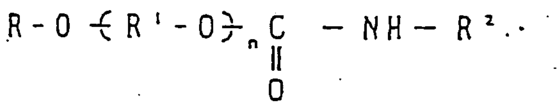 · · (I)

dans laquelle R est un groupe alkyle, un groupe aralkyle ou un groupe aryle, $R^1$ est un groupe alkylène, $R^2$ est un groupe alkyle, un groupe aralkyle ou un groupe aryle, et n est un entier qui amène la viscosité du composé (I) jusqu'à un niveau de $12 \cdot 10^{-6}$ à $300 \cdot 10^{-6}$ $m^2/s$ (12 à 300 cst) à 40°C.

5. Composition de réfrigération avec des fonctions de prévention des frottements, de l'abrasion et du grippage de parties coulissantes, qui comprend du 1,1,1,2-tétrafluoroéthane et un composé représenté par la formule :

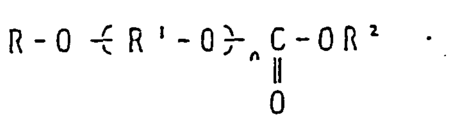 · · (I)

dans laquelle R est un groupe alkyle, un groupe aralkyle ou un groupe aryle, $R^1$ est un groupe alkylène, $R^2$ est un groupe alkyle, un groupe aralkyle ou un groupe aryle, et n est un entier qui amène la viscosité du composé (I) jusqu'à un niveau de $12 \cdot 10^{-6}$ à $300 \cdot 10^{-6}$ $m^2/s$ (12 à 300 cst) à 40˚C.

**6.** Composition de réfrigération avec des fonctions de prévention des frottements, de l'abrasion et du grippage de parties coulissantes, qui comprend du 1,1,1,2-tétrafluoroéthane et un composé représenté par la formule :

$$R\text{-}O\{R^1\text{-}O\}_nR^2 \qquad (I)$$

dans laquelle R est un groupe alkyle, un groupe aralkyle ou un groupe aryle, $R^1$ est un groupe alkylène, $R^2$ est un groupe alkyle fluoré, et n est un entier qui amène la viscosité du composé (I) jusqu'à un niveau de $12 \cdot 10^{-6}$ à $300 \cdot 10^{-6}$ $m^2/s$ (12 à 300 cst) à 40˚C.

**7.** Composition de réfrigération avec des fonctions de prévention des frottements, de l'abrasion et du grippage de parties coulissantes, qui comprend un tétrafluoroéthane et au moins un polyéther choisi dans le groupe constitué par :

(1) 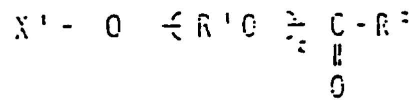

(2) 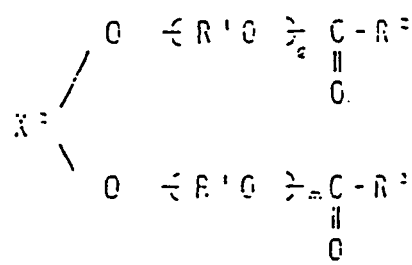

(3) 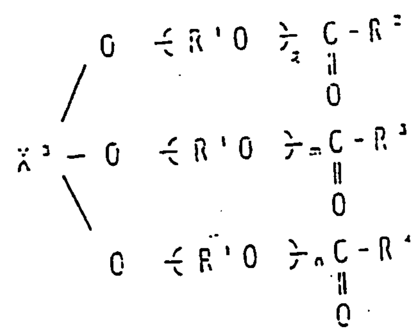

où $R^1$ est un groupe alkylène, chacun de $R^2$, $R^3$ et $R^4$, qui peuvent être identiques ou différents, est un groupe hydroxyalkyle, $X^1$ est un atome d'hydrogène ou un groupe hydroxyalkyle, $X^2$ est un résidu obtenu par élimination de groupes hydroxyle d'un composé dihydroxy, $X^3$ est un résidu obtenu par élimination de groupes hydroxyle d'un composé trihydroxy, et 1, m et n, qui peuvent être identiques ou différents, sont des entiers qui amènent la viscosité cinématique des composés de formules (1) à (3) jusqu'à un niveau de $12 \cdot 10^{-6}$ à $300 \cdot 10^{-6}$ $m^2/s$ (12 à 300 cst) à 40˚C.

**8.** Composition de réfrigération avec des fonctions de prévention des frottements, de l'abrasion et du grippage de parties coulissantes, qui comprend un tétrafluoroéthane et au moins un polyéther choisi dans le groupe constitué par :

(1) 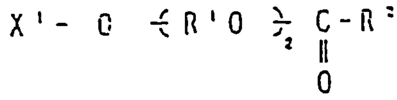

(2) 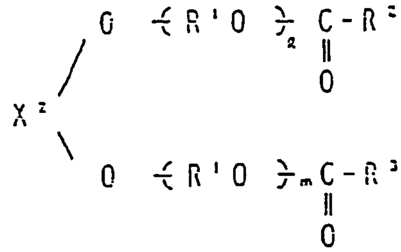

(3) 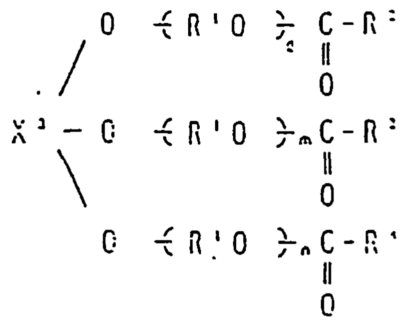

où $R^1$ est un groupe alkylène, chacun de $R^2$, $R^3$ et $R^4$, qui peuvent être identiques ou différents, est un groupe alkyle, un groupe aralkyle ou un groupe aryle, lesquels groupes étant substitués par au moins un atome d'halogène, $X^1$ est un atome d'hydrogène, ou un groupe alkyle, un groupe aralkyle, ou un groupe aryle, lesquels groupes étant substitués par au moins un atome d'halogène, $X^2$ est un résidu obtenu par élimination de groupes hydroxyle d'un composé dihydroxy, $X^3$ est un résidu obtenu par élimination de groupes hydroxyle d'un composé trihydroxy, et 1, m et n, qui peuvent être identiques ou différents, sont des entiers qui amènent la viscosité cinématique des composés de formules (1) à (3) jusqu'à un niveau de $12 \cdot 16^{-6}$ à $300 \cdot 10^{-6}$ $m^2/s$ (12 à 300 cst) à 40°C.

**9.** Composition de réfrigération avec des fonctions de prévention des frottements, de l'abrasion et du grippage de parties coulissantes, qui comprend un tétrafluoroéthane et au moins un polyéther choisi dans le groupe constitué par :

(1) $X^1-O\left(R^1O\right)_l R^2$

(2) 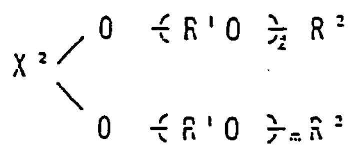

(3) 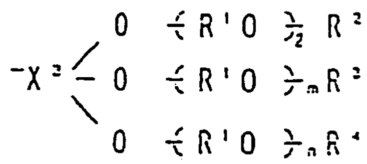

où $R^1$ est un groupe alkylène, chacun de $R^2$, $R^3$ et $R^4$, qui peuvent être identiques ou différents, est un groupe glycidyle ou un atome d'hydrogène, avec la réserve qu'au moins deux membres choisis parmi $R^2$, $R^3$ et $R^4$ ne sont pas des atomes d'hydrogène en même temps, 1, m et n sont des entiers qui amènent la viscosité cinématique des composés ci-dessus de formules (1) à (3) jusqu'à un niveau de $12 \cdot 10^{-6}$ à $300 \cdot 10^{-6}$ $m^2/s$ (12 à 300 cst) à 40°C, $X^1$ est un atome d'hydrogène, ou un groupe glycidyle, avec la réserve que $X^1$ et $R^2$ ne sont pas des atomes d'hydrogène en même temps, $X^2$ est un résidu obtenu par élimination de groupes hydroxyle d'un composé dihydroxy, et $X^3$ est un résidu obtenu par élimination de groupes hydroxyle d'un composé trihydroxy.

**10.** Composition de réfrigération avec des fonctions de prévention des frottements, de l'abrasion et du grippage de parties coulissantes, qui comprend un tétrafluoroéthane et au moins un composé choisi dans le groupe constitué par :

$$(1) \quad X^1-O(R^1O)_l Y^1(OR^1)_m O-X^2$$

où $R^1$ est un groupe alkylène, chacun de $X^1$ et $X^2$ est un groupe alkyle ou un groupe aryle, $Y^1$ est un résidu d'un acide dicarboxylique ayant au moins 3 atomes de carbone, et 1 et m sont des entiers qui amènent la viscosité cinématique du composé de formule (1) jusqu'à un niveau de $12 \cdot 10^{-6}$ à $300 \cdot 10^{-6}$ $m^2/s$ (12 à 300 cst) à 40°C.

**11.** Composition de réfrigération avec des fonctions de prévention des frottements, de l'abrasion et du grippage de parties coulissantes, qui comprend un tétrafluoroéthane et au moins un polyéther choisi dans le groupe constitué par :

$$(1) \quad X^1-O(R^1O)_l R^2$$

(2) 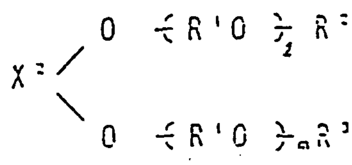

(3) 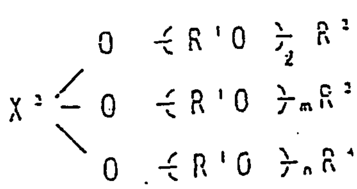

où $R^1$ est un groupe alkylène, chacun de $R^2$, $R^3$ et $R^4$, qui peuvent être identiques ou différents, est un alcanesulfonyle, un arènesulfonyle ou un atome d'hydrogène, avec la réserve qu'au moins deux membres choisis parmi $R^2$, $R^3$ et

$R^4$ ne sont pas des atomes d'hydrogène en même temps, 1, m et n, qui peuvent être identiques ou différents, sont des entiers qui amènent la viscosité cinématique des composés de formules (1) à (3) jusqu'à un niveau de $12 \cdot 10^{-6}$à $300 \cdot 10^{-6}$ $m^2/s$ (12 à 300 cst) à 40°C, $X^1$ est un atome d'hydrogène, un alcanesulfonyle, ou un arènesulfonyle, avec la réserve que $X^1$ et $R^2$ ne sont pas des atomes d'hydrogène en même temps, $X^2$ est un résidu obtenu par élimination de groupes hydroxyle d'un composé dihydroxy, et $X^3$ est un résidu obtenu par élimination de groupes hydroxyle d'un composé trihydroxy.

**12.** Composition selon l'une quelconque des revendications 1, 2 et 7 à 11, dans laquelle le tétrafluoroéthane est le 1,1,1,2-tétrafluoroéthane.

**13.** Composition selon l'une quelconque des revendications 1 à 11, dans laquelle le rapport en poids du polyéther sur le tétrafluoroéthane est de 1/99 à 99/1.

**14.** Composition selon l'une quelconque des revendications 1 à 11, qui contient en outre au moins un membre choisi dans le groupe constitué par une huile minérale de naphtène, une huile minérale de paraffine, une huile synthétique d'alkylbenzène, une huile synthétique de poly-$\alpha$-oléfine et une huile de silicone fluorée.

**15.** Composition selon l'une quelconque des revendications 1 à 11, qui contient en outre au moins un agent stabilisant choisi dans le groupe constitué par un composé phosphite, un composé sulfure de phosphine et un composé éther glycidylique.

**16.** Composition selon l'une quelconque des revendications 1, 2 et 4 à 11, dans laquelle $R^1$ dans les formules (1) à (3) est un groupe éthylène, un groupe propylène ou un mélange d'un groupe éthylène et d'un groupe propylène.

**17.** Composition selon l'une quelconque des revendications 1, 2 et 4 à 11, dans laquelle $X^2$ est un résidu de propylène glycol.

**18.** Composition selon l'une quelconque des revendications 1, 2 et 4 à 11, dans laquelle $X^3$ est un résidu de triméthylol propane.